(19) Europäisches Patentamt
European Patent Office
Office européen des brevets

(11) **EP 4 470 989 A1**

(12) **EUROPEAN PATENT APPLICATION**

(43) Date of publication:
**04.12.2024 Bulletin 2024/49**

(21) Application number: **23176435.8**

(22) Date of filing: **31.05.2023**

(51) International Patent Classification (IPC):
**C04B 28/06** (2006.01)   **C04B 28/08** (2006.01)
**C04B 28/14** (2006.01)   **C04B 111/60** (2006.01)
**C04B 111/62** (2006.01)

(52) Cooperative Patent Classification (CPC):
(C-Sets available)
**C04B 28/065; C04B 28/06; C04B 28/08;**
**C04B 28/14;** C04B 2111/60; C04B 2111/62  (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Ecocem Materials Limited**
**Dublin 3 D03E0C0 (IE)**

(72) Inventors:
• **ALFANI, Roberta**
**75012 PARIS (FR)**
• **KACI, Yasmine**
**75012 PARIS (FR)**
• **GERMAIN, Stéphane**
**75012 PARIS (FR)**

(74) Representative: **Plasseraud IP**
**104 Rue de Richelieu**
**CS92104**
**75080 Paris Cedex 02 (FR)**

(54) **HYDRAULIC BINDER COMPOSITIONS FOR FLOORING APPLICATIONS**

(57)    The invention a hydraulic binder composition comprising:

Component a) Between 0,5 weight% and 5 weight% of Portland cement;

Component b) Between 5 weight% and 30 weight% of aluminate cement;

Component c) Between 5 weight% and 15 weight% of a sulfate source;

Component d) Between 35 weight% and 88.5 weight% of ground granulated blast furnace slag having a $d_{50}$ between 7.5 $\mu$m and 12 $\mu$m and a das between 19 $\mu$m and 29 $\mu$m.

EP 4 470 989 A1

(52) Cooperative Patent Classification (CPC): (Cont.)

C-Sets
**C04B 28/06, C04B 18/141, C04B 20/008,**
**C04B 22/142, C04B 40/0608, C04B 7/02;**
**C04B 28/065, C04B 18/141, C04B 20/008,**
**C04B 22/142, C04B 40/0608, C04B 7/02,**
**C04B 7/32, C04B 7/3453;**
**C04B 28/08, C04B 20/008, C04B 22/142,**
**C04B 40/0608, C04B 7/02, C04B 7/32,**
**C04B 7/323, C04B 7/3453;**
**C04B 28/14, C04B 18/141, C04B 20/008,**
**C04B 40/0608, C04B 7/02, C04B 7/32**

**Description**

**Technical Field**

This disclosure pertains to the field of hydraulic binder compositions comprising Ground Granulated Blast Furnace Slag (GGBS) for preparing industrial mortars. In particular, the technical field of the invention relates to hydraulic mineral binders including Ground Granulated Blast Furnace Slag (GGBS or slag), which are used in compositions able to set and harden, such as mortar and more specifically mortars for flooring applications like self levelling underlayment (SLU) and screed.

**Background Art**

In order to be usable for flooring application a mortar has to harden and dry quickly. Indeed, flooring product, like SLU and screed are intended to be covered with a floor covering product such as tiles or wooden floor and workers should be able to walk on the floor to pursuit construction or renovation. In addition, to be covered with a floor covering product, the moisture level should be low.

Moreover, flooring product need to be resistant to heat, especially when an underfloor heating system is present.

To the knowledge of the applicants, industrial mortars for flooring applications commercially available comprise, as the binder, Portland cement, combined with rapid cement, like aluminate and sulphoaluminate cement and a calcium sulfate source for fulfilling the requirement of quick hardening and quick drying.

Even if these industrial mortars give satisfaction, it is a major issue to limit the emission of carbon dioxide. For instance, Portland cement production has a strong and negative impact on the environment due to the emissions of large quantities of carbon dioxide. The production of cement inherently generates $CO_2$ during the calcination of the raw materials at very high temperature (1450°C) in a kiln through decarbonation of the limestone (Eq. (1)):

$$CaCO_3\,(s) \rightarrow CaO\,(s) + CO_2\,(g) \qquad (Eq.\ (1))$$

In addition, carbon dioxide is released as a result of the combustion of the fossil fuels needed to heat the cement kiln. By adding the additional emissions of grinding, almost one ton of $CO_2$ per ton of Portland cement is obtained. Overall, the cement industry is responsible for about 7 to 9% of the global carbon dioxide emissions.

Hydraulic binder compositions having low carbon impact, have been developed by replacing at least a part of Portland cement with Ground Granulated Blast Furnace Slag (GGBS), as disclosed for instance in documents WO 2017/198930 or WO 2019/110134.

However, in the field of industrial mortars for flooring application the quick drying is brought by the aluminate cement part, which also generate emission of carbon dioxide. Thus, there is a need to develop industrial mortars for flooring application in which Portland cement and aluminate cement are, at least partially, replaced by a binder having a lower carbon dioxide impact.

In this context, the invention aims at addressing at least one of the above problems and/or needs, through fulfilling at least one of the following objectives:

- O1- Providing a GGBS-based binder or a mortar composition including said GGBS-based binder, which is attractive substitute to Ordinary Portland Cement (OPC) and allow to reduce aluminate cement-based in flooring compositions.

- O2- Providing a slag-based binder or a mortar composition including said GGBS-based binder, which is environmentally friendly.

- O3- Providing a slag-based binder or a mortar composition including said GGBS-based binder, which gives rise to wet formulations with appropriate rheological properties, i.e stable rheology (good workability) during the usual setting time (e.g. from some minutes to several hours) required by the users of said wet formulation.

**Summary**

At least one of the above objectives is reached thanks to a hydraulic binder composition comprising:

Component a) Between 0,5 weight% and 5 weight% of Portland cement;

Component b) Between 5 weight% and 30 weight% of aluminate cement;

Component c) Between 5 weight% and 15 weight% of a sulfate source;

Component d) Between 35 weight% and 88.5 weight% of ground granulated blast furnace slag having a $d_{50}$ between 7.5 $\mu$m and 12 $\mu$m and a $d_{85}$ between 19 $\mu$m and 29 $\mu$m.

The invention also concerns a dry industrial mortar composition, in particular mortars for flooring application, especially screed and self levelling underlayment (SLU) comprising at least one aggregate and the hydraulic binder composition mentioned above.

The invention is also directed to a wet industrial mortar formulation, in particular mortars for floor covering, especially self levelling underlayment (SLU) comprising at least one aggregate, hydraulic binder composition mentioned above and water.

The invention further concerns a hardened industrial mortar product obtained from the wet industrial mortar formulation mentioned above.

The invention is in addition directed to a process for preparing the wet industrial mortar formulation mentioned above comprising a step of mixing with water, at least one aggregate and the hydraulic binder composition mentioned above, the hydraulic binder composition being prepared before the mixing step or in situ during the mixing step from at least some of the different components of the hydraulic binder composition taken separately and/or under the form of premix(es).

**Definitions**

According to the terminology of this text, the following non limitative definitions have to be taken into consideration:

"binder" refers to "hydraulic binder" meaning any material that hardens just by adding water, like cement.

"cement" is understood as meaning a powdery substance made for use in making mortar or concrete. They are mineral binders, possibly free from any organic compound. It refers to any ordinary cement and it includes Ordinary Portland Cement, blends of Ordinary Portland Cement, Pozzolanic materials and/or Filler and alkali-activated based cements.

"clinker" is understood as the main constituent phase of Ordinary Portland Cement obtained from the co-calcination of limestone and an aluminosilicate source.

"mortar" refers to a material composed of binder(s), aggregates such as filler, sand and other components, like admixtures.

"Dry industrial mortar composition" refers to a material composed of binder(s), aggregates such as sand and gravel and other components, like admixtures.

"Wet industrial mortar formulation" refers to a material composed of binder(s), aggregates such as sand and gravel and other components, like admixtures and water.

"Hardened industrial mortar product" refers to the hardened product obtained from wet industrial mortar composition after reaction and evaporation of the water.

"$d_{10}$" gives the median size of the granulometric distribution of material's particles (usually in micrometers for cementation materials). It means that 10% of the particles have a size less than the $d_{10}$ number and 90% of the particles have a size greater than the $d_{10}$ number. The measurement of $d_{10}$ is done by Laser diffraction analysis, also known as Laser diffraction spectroscopy, by means of Laser diffraction analyzer such as "SYMPATEC" and commercialized by the SYMPATEC company, with the dry way method.

"$d_{50}$" gives the median size of the granulometric distribution of material's particles (usually in micrometers for cementation materials). It means that 50% of the particles have a size less than the $d_{50}$ number and 50% of the particles have a size greater than the $d_{50}$ number. The measurement of $d_{50}$ is done by Laser diffraction analysis, also known as Laser diffraction spectroscopy, by means of Laser diffraction analyzer such as "SYMPATEC" and commercialized by the SYMPATEC company, with the dry way method.

"$d_{85}$" gives the median size of the granulometric distribution of material's particles (usually in micrometers for cementation materials). It means that 85% of the particles have a size less than the $d_{85}$ number and 15% of the particles have a size greater than the $d_{85}$ number. The measurement of $d_{85}$ is done by Laser diffraction analysis, also known as Laser diffraction spectroscopy, by means of Laser diffraction analyzer such as " SYMPATEC " and commercialized by the SYMPATEC company, with the dry way method.

"$d_{90}$" gives the median size of the granulometric distribution of material's particles (usually in micrometers for cementation materials). It means that 90% of the particles have a size less than the $d_{90}$ number and 10% of the particles have a size greater than the $d_{90}$ number. The measurement of $d_{90}$ is done by Laser diffraction analysis, also known as Laser diffraction spectroscopy, by means of Laser diffraction analyzer such as " SYMPATEC " and commercialized by the SYMPATEC company, with the dry way method.

**Brief Description of Drawings**

**Fig. 1**

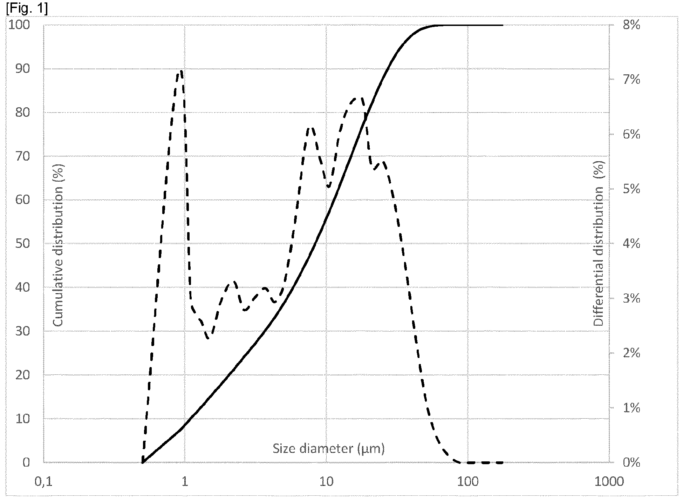

[Fig. 1] is a graphic representing the granulometric distribution of a GGBS used in the hydraulic binder of the invention.

**Detailed description**

*The hydraulic binder composition*

As mentioned above, in a first aspect, the invention concerns a hydraulic binder composition comprising:

Component a) Between 0.5 weight% and 5 weight% of Portland cement;

Component b) Between 5 weight% and 30 weight% of aluminate cement;

Component c) Between 5 weight% and 15 weight% of a sulfate source;

Component d) Between 35 weight% and 88.5 weight% of ground granulated blast furnace slag having a $d_{50}$ between 7.5 $\mu$m and 12 $\mu$m and a $d_{85}$ between 19 $\mu$m and 29 $\mu$m.

*The Portland cement*

The hydraulic binder composition according to the invention comprises a component a) which is Portland cement in an amount of between 0.5 weight% and 5 weight %.
In an embodiment, the Portland cement is Ordinary Portland Cement (OPC) according to standard EN 197-1
Advantageously, the hydraulic binder composition comprises between 1 weight% and 4 weight% of Portland cement, preferably between 1.5 weight% and 3.5 weight% and more preferably between 2 weight% and 3 weight%.

*The aluminate Cement*

The hydraulic binder composition according to the invention comprises a component b) which is an aluminate cement in an amount of between 5 weight% and 30 weight%. Preferably, the aluminate cement is selected in the group comprising, preferably consisting of, calcium aluminate cement (CAC), calcium sulfoaluminate cement (CSA), Belite-Ye'elimite-Ferritecement (BYF) and mixtures thereof.
The calcium aluminate cement may be composed by at least one of the following crystalline form: monocalcium aluminate ($CaO.Al_2O_3$), monocalcium dialuminate ($CaO.2\,Al_2O_3$), monocalcium hexa-aluminate ($CaO.6Al_2O_3$), dicalcium alumina silicate ($2CaO.Al_2O_3.SiO_2$), tricalcium aluminate ($3CaO.Al_2O_3$), dodecacalcium hepta-aluminate ($12CaO.7Al_2O_3$), ye'elimite ($4CaO.3Al_2O_3.SO_3$), calcium aluminoferrite ($4CaO \cdot Al_2O_3 \cdot Fe_2O_3$).
Advantageously, the hydraulic binder composition comprises between 7.5 weight% and 25 weight% of aluminate cement, preferably between 10 weight% and 20 weight%, more preferably between 12.5 weight% and 17.5 weight%.

*The sulfate source*

The hydraulic binder composition according to the invention comprises a component c) which is a sulfate source in an amount of between 5 weight % and 15 weight %.
Preferably, the sulfate source is selected from the group comprising, preferably consisting of, calcium sulfate

($CaSO_4$), sodium sulfate ($Na_2SO_4$), potassium sulfate ($K_2SO_4$), lithium sulfate ($Li_2SO_4$) and mixtures thereof.

When the sulfate source is calcium sulfate, it may be anhydrite, hemihydrate or dihydrate, the difference resides in molecule(s) of water bounded to calcium sulfate: anhydrite no water ($CaSO_4$), hemihydrate contains half molecule of water ($CaSO_4 . \frac{1}{2} H_2O$), dihydrate, also known as gypsum, contains 2 molecules of water ($CaSO_4 . 2 H_2O$). According to the invention, the calcium sulfate is anhydrite calcium sulfate.

Advantageously, the hydraulic binder composition comprises between 8 weight% and 12 weight% of a sulfate source, preferably between 9 weight% and 11 weight%.

*The ground granulated blast furnace slag*

The hydraulic binder composition according to the invention comprises between 35 weight% and 88.5 weight% of a component d) which is ground granulated blast furnace slag having a $d_{50}$ between 7.5 $\mu$m and 12 $\mu$m and a $d_{85}$ between 19 $\mu$m and 29 $\mu$m.

Advantageously, the hydraulic binder composition comprises between 50 weight% and 80 weight% of component d), preferably between 60 weight% and 75 weight%.

In an embodiment the ground granulated blast furnace slag according to the invention has a $d_{10}$ between 0.5 $\mu$m and 1.7 $\mu$m.

In a preferred embodiment, the ground granulated blast furnace slag further has a $d_{90}$ between 25 $\mu$m and 32 $\mu$m.

In an embodiment the ground granulated blast furnace slag has a $d_{50}$ between 8 $\mu$m and 10 $\mu$m.

In an embodiment the ground granulated blast furnace slag has a $d_{85}$ between 21 $\mu$m and 25 $\mu$m.

In an embodiment the ground granulated blast furnace slag has a $d_{90}$ between 27 $\mu$m and 30 $\mu$m.

*The dry industrial mortar composition*

As mentioned above, the invention concerns in a second aspect a dry industrial mortar composition, in particular mortars for flooring application, especially screed and self levelling underlayment (SLU) comprising at least one aggregate and the hydraulic binder composition mentioned above.

According to the invention, "dry" concrete composition or "dry" industrial mortar composition refers to composition that are in the form of powder and ready to be mixed with water. In other words, the dry concrete composition or dry industrial mortar composition of the invention may content some moisture, but it essentially contains solid components which are intended to be mixed with water before its application.

Aggregates comprise a large category of particulate material used in construction, including fillers, sands, gravels, crushed stones, slag (not-granulated), recycled concrete and geosynthetic aggregates. They serve as reinforcement to add strength to the overall composite material.

Advantageously, said dry concrete composition or dry industrial mortar composition can also include, apart from aggregates, one or several ingredients, especially functional admixtures, additions and fibres, which can be the other optional component mentioned below.

*Optional other components*

The binder composition is advantageously enriched with one or several other components which are ingredients, notably functional additives preferably selected in the following list:

• *Water retention agent.*

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

• *Rheological agent*

The possible rheological agent (also named a "thickener") is preferably chosen in the group comprising, more preferably consisting of: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

*• Defoamer/Antifoams*

The possible defoamer is preferably chosen in the group comprising, more preferably consisting of: polyether polyols and mixes thereof.

*• Biocide*

The possible biocide is preferably chosen in the group comprising, more preferably consisting of: mineral oxides like zinc oxide and mixes thereof.

*• Pigment*

The possible pigment is preferably chosen in the group comprising, more preferably consisting of: $TiO_2$, iron oxide and mixes thereof.

*• Flame retardant*

Flame retardant (or flame proof agent) makes it possible to increase the fire resistance and/or to shrink the speed of flame spreading of the composition.

*• Air-entraining agents*

Air-entraining agents (surfactants) are advantageously chosen in the group comprising, more preferably consisting of, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting of, the sulfonate olefins, the sodium lauryl sulfate and their mixes.

*• Retarders*

Retarders are advantageously chosen in the group comprising, more preferably consisting of, tartric acid and its salts: sodium or potassium salts, citric acid and its salts: sodium (trisodic citrate) and their mixes.

*• Accelerators*

Accelerators are advantageously chosen in the group comprising, alkaline metal salts more preferably consisting of, , sodium and potassium carbonates, sodium chloride, or calcium formate, or lithium salts
In addition, other components may be:

- *Plasticizers*

- *Fibres*

- *Dispersion powders*

- *Polymeric resins*

- *Complexing agents*

- *Drying shrinkage reducing agents based on polyols.*

The total content of these optional other components in the dry concrete composition or dry industrial mortar composition is preferably comprised between 0.1% and 10% by weight of the total weight of the dry concrete composition or dry industrial mortar composition.

*The wet industrial mortar formulation*

As mentioned above, the invention concerns in a third aspect a wet industrial mortar formulation, in particular mortars for floor covering, especially self levelling underlayment (SLU) comprising at least one aggregate, hydraulic binder composition mentioned above and water.

*The hardened industrial mortar product*

As mentioned above, the invention concerns in a fourth aspect a hardened industrial mortar product obtained from the wet industrial mortar formulation mentioned above.

The wet is applied and dry and harden

*The process for preparing the wet industrial mortar formulation*

As mentioned above, the invention concerns in a fifth aspect a process for preparing the wet industrial mortar formulation mentioned above comprising a step of mixing with water, at least one aggregate and the hydraulic binder composition mentioned above, the hydraulic binder composition being prepared before the mixing step or in situ during the mixing step from at least some of the different components of the hydraulic binder composition taken separately and/or under the form of premix(es).

In other words, wet concrete composition or wet industrial mortar composition could be prepared by two distinct methods.

In a first method, the binder composition is prepared, and then mixed with the at least one aggregate. The dry concrete composition or dry mortar composition is thereafter mixed with water.

In a second method, the wet concrete composition or wet industrial mortar composition is prepared by mixing in water each component of the binder composition and the aggregates.

According to the present disclosure, the term "mixing" has to be understood as any form of mixing.

In a preferred embodiment a part of the binder composition and at least a part of the water are mixed together prior to the mixing with the aggregate.

In a preferred embodiment, the process is implemented with a ratio water to binder composition comprised between 0.1 and 1.2, advantageously between 0.15 and 0.45, and more advantageously between 0.2 and 0.4.

*The use of the hydraulic binder composition*

The invention is also directed to the use of the binder composition described above for improving the fresh state rheology, for instance fresh state yield stress and fresh state viscosity, of wet industrial mortar composition in particular for floor covering.

Advantageously, for the use according to the invention, the mortar fresh state yield stress is comprised between 0 Pa and 200 Pa, advantageously between 5 Pa and 100 Pa and more advantageously between 30 Pa and 60 Pa.

Advantageously, for the use according to the invention, the paste fresh state viscosity is comprised between 0 Pa.s and 50 Pa.s, advantageously between 15 Pa.s and 35 Pa.s and more advantageously between 20 Pa.s and 30 Pa.s.

**Examples**

Example 1: Preparation of a hydraulic binder composition according to the invention and of a mortar comprising the same

A hydraulic binder composition has been prepared by mixing the different component of the same. The components and their proportions are listed in table 1 below.

[Table 1]

| Component | Dry weight % |
|---|---|
| Ordinary Portland Cement | 1.82 |
| Calcium Aluminate Cement | 8.49 |
| Calcium sulfate | 9.16 |
| Ground Granulated Blast Furnace Slag | 47.34 |
| Additives | 33.19 |

The GGBS used has the granulometric distribution represented at figure 1.

EP 4 470 989 A1

This hydraulic binder composition has then been mixed with sand and filler in a proportion of 52.39 dry weight % of hydraulic binder and 47.61 dry weight % of sand. The resulting mixture has then been mixed with water at a ratio water to binder of 0.34.

Example 2: adhesion and shrinkage test

The mortar obtained at example 1 has been stored at 23°C under a relative humidity of 50% for 28 days. The adhesion resistance and the shrinkage have been measured according to the standard NF EN 13813. The adhesion force measured is equal to 1.07 MPa which is higher than the specification being 1 MPa, according to CSTB (Centre Scientifique et Technique du Bâtiment) document QB11-02 published on March 14, 2022 (https://evaluation.cstb.fr/doc/certification/certificats/qb11-02/qb11-02-document-technique-11-02-enduits-de-sol-rev01-140322.pdf). The shrinkage is of -50$\mu$m/m which is very low, according to the standard and technical recommendations.

Example 3: variation of the ratio water to binder

A hydraulic binder has been prepared in the same manner than in Example 1, except that the water to binder ratio was 0.43. The adhesion resistance has been measured according to the standard NF EN 13813. The adhesion force measured is equal to 1.03 MPa

Example 4: variation of the adhesion under different storage conditions

The mortar obtained at example 1 has been stored at 45°C, 60°C on a wet support or with a moisture recovery for 28 days according to CSTB document QB11-02 published on March 14, 2022. In these conditions, the specification set a level of 0.8Mpa. The adhesion forces obtained are reported in table 2 below.

[Table 2]

| Storage | Adhesion (Mpa) |
|---|---|
| 45°C | 0.96 |
| 60°C | 0.89 |
| Wet support | 0.96 |
| Moisture recovery | 0.94 |

It can be seen from table 2 that adhesion forces are all above the 0.8 MPa specification as recommended in CSTB document QB11-02 published on March 14, 2022.

**Claims**

1. Hydraulic binder composition comprising:

   Component a) Between 0,5 weight% and 5 weight% of Portland cement;
   Component b) Between 5 weight% and 30 weight% of aluminate cement;
   Component c) Between 5 weight% and 15 weight% of a sulfate source;
   Component d) Between 35 weight% and 88.5 weight% of ground granulated blast furnace slag having a $d_{50}$ between 7.5 $\mu$m and 12 $\mu$m and a $d_{85}$ between 19 $\mu$m and 29 $\mu$m.

2. Hydraulic binder composition according to claim 1, wherein it comprises between 1 weight% and 4 weight% of Portland cement, preferably between 1.5 weight% and 3.5 weight% and more preferably between 2 weight% and 3 weight%.

3. Hydraulic binder composition according to any one of the preceding claims, wherein it comprises between 7.5 weight% and 25 weight% of aluminate cement, preferably between 10 weight% and 20 weight%, more preferably between 12.5 weight% and 17.5 weight%.

4. Hydraulic binder composition according to any one of the preceding claims, wherein the aluminate cement is selected in the group comprising, preferably consisting of, calcium aluminate cement (CAC), calcium sulfoaluminate cement (CSA), Belite-Ye'elimite-Ferritecement (BYF) and mixtures thereof.

5. Hydraulic binder composition according to any one of the preceding claims, wherein it comprises between 8 weight% and 12 weight% of a sulfate source, preferably between 9 weight% and 11 weight%.

6. Hydraulic binder composition according to any one of the preceding claims, wherein the sulfate source is selected in the group comprising, preferably consisting of, calcium sulfate ($CaSO_4$), sodium sulfate ($Na_2SO_4$), potassium sulfate ($K_2SO_4$), lithium sulfate ($Li_2SO_4$) and mixtures thereof.

7. Hydraulic binder composition according to any one of the preceding claims, wherein it comprises between 50 weight% and 80 weight% of ground granulated blast furnace slag, preferably between 60 weight% and 75 weight%.

8. Hydraulic binder composition according to any one of the preceding claims, wherein component d) has, further has a $d_{90}$ between 25 $\mu$m and 32 $\mu$m, preferably a $d_{90}$ between 27 $\mu$m and 30 $\mu$m.

9. Hydraulic binder composition according to any one of the preceding claims, wherein component d) has a $d_{50}$ between 8 $\mu$m and 10 $\mu$m.

10. Hydraulic binder composition according to any one of the preceding claims, wherein component d) has a $d_{85}$ between 21 $\mu$m and 25 $\mu$m.

11. Dry industrial mortar composition, in particular mortars for flooring application, especially screed and self levelling underlayment (SLU) comprising at least one aggregate and the hydraulic binder composition according to any one of claims 1 to 10.

12. Wet industrial mortar formulation, in particular mortars for floor covering, especially self levelling underlayment (SLU) comprising at least one aggregate, the hydraulic binder composition according to any one of claims 1 to 10 and water.

13. Hardened industrial mortar product obtained from the wet industrial mortar formulation according to claim 12.

14. Process for preparing the wet industrial mortar formulation according to claim 12 comprising a step of mixing with water, at least one aggregate and the hydraulic binder composition according to any one of claims 1 to 10, the hydraulic binder composition being prepared before the mixing step or in situ during the mixing step from the different components of the hydraulic binder composition taken separately and/or under the form of premix(es).

15. Process according to claim 14, wherein the ratio water to binder composition comprised between 0.1 and 1.2, advantageously between 0.15 and 0.45, and more advantageously between 0.2 and 0.4.

[Fig. 1]

Europäisches
Patentamt

European
Patent Office

Office européen
des brevets

**EUROPEAN SEARCH REPORT**

Application Number

EP 23 17 6435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 080 742 A2 (HEIDELBERGCEMENT AG [DE]) 22 July 2009 (2009-07-22)<br>* claims 1-12 * | 1,2,4, 6-15<br>3,5 | INV.<br>C04B28/06<br>C04B28/08<br>C04B28/14 |
| A | CN 102 173 711 A (WUHAN IRON & STEEL GROUP CORP) 7 September 2011 (2011-09-07)<br>* example 2 * | 1 | ADD.<br>C04B111/60<br>C04B111/62 |
| A | JP 2008 030985 A (UBE INDUSTRIES) 14 February 2008 (2008-02-14)<br>* claims 1-6 * | 1 | |
| A | EP 0 675 088 A2 (SICOWA VERFAHRENSTECH [DE]; PRO MINERAL GES [DE]) 4 October 1995 (1995-10-04)<br>* page 3; table 1 *<br>* claim 1 * | 1 | |
| A | US 2023/142698 A1 (DAUBRESSE ANNE [FR] ET AL) 11 May 2023 (2023-05-11)<br>* page 12 - page 13; example 11; table 6 * | 1 | TECHNICAL FIELDS SEARCHED (IPC) |
| A | WO 2019/110134 A1 (ECOCEM MAT LIMITED [IE]) 13 June 2019 (2019-06-13)<br>* page 22; example 8 *<br>* claims 1,2,5,6,8 * | 1 | C04B |
| A | DE 41 35 144 A1 (KYOWA GIKEN [JP]; TAKEDA CHEMICAL INDUSTRIES LTD [JP] ET AL.) 4 June 1992 (1992-06-04)<br>* page 5; table 1 *<br>* page 6; examples 2,6 *<br>* claims 1-4 * | 1 | |
| A | DE 195 01 100 A1 (PRO MINERAL GES [DE]; READYMIX ZEMENTWERKE [DE] ET AL.) 18 July 1996 (1996-07-18)<br>* claims 1,2,4,5,6,7,8 * | 1 | |

-/--

The present search report has been drawn up for all claims

| Place of search | Date of completion of the search | Examiner |
|---|---|---|
| The Hague | 15 November 2023 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 17 6435

### DOCUMENTS CONSIDERED TO BE RELEVANT

| Category | Citation of document with indication, where appropriate, of relevant passages | Relevant to claim |
|---|---|---|
| A | CN 107 902 950 A (UNIV HUBEI TECHNOLOGY) 13 April 2018 (2018-04-13) * example 4 * ----- | 1 |
| A | US 2016/108897 A1 (KIM KYOUNG CHUL [KR] ET AL) 21 April 2016 (2016-04-21) * claims 1-3 * ----- | 1 |
| A | FR 2 940 275 A1 (LAFARGE SA [FR]) 25 June 2010 (2010-06-25) * page 14; example last; table iv * ----- | 1 |
| A | EP 4 137 323 A1 (IMERTECH [FR]) 22 February 2023 (2023-02-22) * page 31; example 17; table 9 * * page 30; example 15; table 8 * ----- | 1 |
| A | WO 2022/122848 A1 (IMERTECH [FR]) 16 June 2022 (2022-06-16) * page 46 - page 47; example 15; table 8 * ----- | 1 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| The Hague | 15 November 2023 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6435

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | | | Publication date | Patent family member(s) | | Publication date |
|---|---|---|---|---|---|---|
| EP 2080742 | A2 | | 22-07-2009 | EP | 2080742 A2 | 22-07-2009 |
| | | | | PL | 2080742 T3 | 29-05-2015 |
| CN 102173711 | A | | 07-09-2011 | NONE | | |
| JP 2008030985 | A | | 14-02-2008 | NONE | | |
| EP 0675088 | A2 | | 04-10-1995 | AT | E186287 T1 | 15-11-1999 |
| | | | | CA | 2145738 A1 | 30-09-1995 |
| | | | | CZ | 290982 B6 | 13-11-2002 |
| | | | | DE | 4410850 A1 | 05-10-1995 |
| | | | | EP | 0675088 A2 | 04-10-1995 |
| | | | | FI | 951503 A | 30-09-1995 |
| | | | | JP | H082950 A | 09-01-1996 |
| | | | | PL | 307885 A1 | 02-10-1995 |
| | | | | RU | 95104230 A | 20-12-1996 |
| US 2023142698 | A1 | | 11-05-2023 | AR | 121536 A1 | 15-06-2022 |
| | | | | AU | 2021234863 A1 | 06-10-2022 |
| | | | | BR | 112022015178 A2 | 11-10-2022 |
| | | | | CA | 3170961 A1 | 16-09-2021 |
| | | | | CL | 2022002141 A1 | 31-03-2023 |
| | | | | CN | 115151517 A | 04-10-2022 |
| | | | | EP | 4118051 A1 | 18-01-2023 |
| | | | | TW | 202134200 A | 16-09-2021 |
| | | | | US | 2023142698 A1 | 11-05-2023 |
| | | | | WO | 2021180594 A1 | 16-09-2021 |
| WO 2019110134 | A1 | | 13-06-2019 | BR | 112020011508 A2 | 17-11-2020 |
| | | | | CA | 3085089 A1 | 13-06-2019 |
| | | | | CN | 111868002 A | 30-10-2020 |
| | | | | EP | 3720829 A1 | 14-10-2020 |
| | | | | US | 2021238094 A1 | 05-08-2021 |
| | | | | WO | 2019110134 A1 | 13-06-2019 |
| | | | | WO | 2019110280 A1 | 13-06-2019 |
| DE 4135144 | A1 | | 04-06-1992 | DE | 4135144 A1 | 04-06-1992 |
| | | | | FR | 2669621 A1 | 29-05-1992 |
| | | | | GB | 2250282 A | 03-06-1992 |
| | | | | JP | 2673218 B2 | 05-11-1997 |
| | | | | JP | H04198074 A | 17-07-1992 |
| DE 19501100 | A1 | | 18-07-1996 | NONE | | |
| CN 107902950 | A | | 13-04-2018 | NONE | | |

EPO FORM P0459

For more details about this annex : see Official Journal of the European Patent Office, No. 12/82

page 1 of 2

**EP 4 470 989 A1**

## ANNEX TO THE EUROPEAN SEARCH REPORT
## ON EUROPEAN PATENT APPLICATION NO.

EP 23 17 6435

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | | | Publication date | Patent family member(s) | | | Publication date |
|---|---|---|---|---|---|---|---|
| US 2016108897 | A1 | | 21-04-2016 | KR | 20140142595 | A | 12-12-2014 |
| | | | | US | 2016108897 | A1 | 21-04-2016 |
| | | | | WO | 2014196682 | A1 | 11-12-2014 |
| FR 2940275 | A1 | | 25-06-2010 | NONE | | | |
| EP 4137323 | A1 | | 22-02-2023 | NONE | | | |
| WO 2022122848 | A1 | | 16-06-2022 | EP | 4259435 | A1 | 18-10-2023 |
| | | | | KR | 20230117421 | A | 08-08-2023 |
| | | | | WO | 2022122848 | A1 | 16-06-2022 |

EPO FORM P0459

For more details about this annex : see Official Journal of the European Patent Office, No. 12/82

page 2 of 2

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017198930 A

- WO 2019110134 A